# EUROPEAN PATENT SPECIFICATION

(11) **EP 3 477 214 B1**
(45) Date of publication and mention of the grant of the patent: **17.05.2023**
(21) Application number: 16907076.0
(22) Date of filing: 02.11.2016
(51) Int. Cl.: F24F 11/30, F25B 49/02

(54) **ACTIVE CONTROL METHOD AND DEVICE FOR INVERTER AIR CONDITIONER**
AKTIVSTEUERUNGSVERFAHREN UND -VORRICHTUNG FÜR EINE WECHSELRICHTERKLIMAANLAGE
PROCÉDÉ ET DISPOSITIF DE COMMANDE ACTIVE POUR UN CLIMATISEUR À INVERSEUR

(30) Priority: 28.06.2016 CN 201610509034
(43) Date of publication of application: 01.05.2019
(73) Proprietor: Hisense Home Appliances Group Co., Ltd., Guangdong 528303 (CN); Hisense (Guangdong) Air Conditioning Co., Ltd., Jiangsha Advanced Manufacturing Zone Jiangmen Guangdong 529085 (CN)
(72) Inventor: LV, Gengui, Foshan Guangdong 528303 (CN); WU, Minan, Foshan Guangdong 528303 (CN); LIU, Xinhua, Foshan Guangdong 528303 (CN); ZHUANG, Zhihong, Foshan Guangdong 528303 (CN)
(74) Representative: Pfenning, Meinig & Partner mbB
(86) International application number: PCT/CN2016/104394
(87) International publication number: WO 2018/000680

(56) References cited:
- CN-A- 1 274 065
- CN-A- 104 236 029
- CN-A- 104 566 817
- JP-A- 2002 286 272
- JP-A- 2002 286 306
- US-A1- 2002 108 384
- US-A1- 2005 210 897
- US-A1- 2015 323 235

## Description

### TECHNICAL FIELD

Embodiments of the present application relate to an inverter air conditioner technology, and in particular, to a control method and controller for an inverter air conditioner.

### BACKGROUND

Compared with a fixed speed air conditioner, an inverter air conditioner employs an inverter compressor and a controller, so that the frequency of the compressor of the air conditioner is not fixed, but can be changed with a load, providing enhanced comfort for a user.

In a high temperature environment, such as, when the temperature is above 50°C, the inverter air conditioner needs to operate at a higher frequency in order to obtain greater cooling capacity. The elevated frequency cause an output power from an intelligent power module (IPM) of the inverter air conditioner to be higher, generating more heat leads to a temperature of the IPM to be higher, higher temperature makes the IPM vulnerable. In addition, the elevated frequency causes the inverter compressor to operate at an ultra-high exhaust pressure. When operating at such ultra-high exhaust pressure for extended period of time, the inverter compressor is susceptible to damage, potentially posing a high safety hazard. In order to solve the above problems, in the relevant art, the operating frequency of the inverter compressor is artificially limited to depress the output power from the IPM, such that the temperature as well as the exhaust pressure may be relatively lower.

Since the operating frequency of the inverter compressor is artificially limited in the above-mentioned inverter air conditioner, cooling capacity of the inverter air conditioner is also reduced US 2002/108384 A1 discloses a control method for an air conditioner which determines whether a temperature of the inverter is greater than a first predetermined temperature and controls the rotational speed of the compressor. When the temperature of the inverter is greater than the first predetermined temperature, the rotational speed of the compressor is decreased.

### SUMMARY

Embodiments of the present invention provide a control method and controller for an inverter air conditioner in order to achieve the purpose of not attenuating the cooling capacity of the inverter air conditioner in a high temperature environment.

In a first aspect, the present application provides a control method for an inverter air conditioner as defined in claim 1. It includes:
Step 1: operating an inverter compressor at a first frequency for a first duration;
Step 2: determining whether a first temperature, which is a temperature of an intelligent power module IPM, exceeds a first threshold and, if the first temperature does not exceed the first threshold, proceeding to Step 3; otherwise, proceeding to Step 8;
Step 3: determining a temperature interval into which a second temperature of the outdoor coil falls, and determining whether the first frequency needs to be adjusted according to the temperature interval and, if the first frequency needs to be adjusted, proceeding to Step 4; otherwise, proceeding to Step 5;
Step 4: increasing the first frequency, and operating the inverter compressor at an increased frequency for a first preset duration, and returning to Step 2;
Step 5: determining whether an exhaust pressure is below a preset threshold and, if the exhaust pressure is below the preset threshold, proceeding to Step 6; otherwise, proceeding to Step 7;
Step 6: reducing the first frequency, and operating the inverter compressor at a reduced frequency for a second preset duration, and then returning to Step 2;
Step 7: disabling the inverter compressor; and
Step 8: decreasing the first frequency, and operating the inverter compressor at a decreased frequency for a third preset duration, and then returning to Step 2.

In a second aspect, the present application provides a controller for an inverter air conditioner as defined in claim 8. It includes:
an operating module, configured to operate an inverter compressor at a first frequency for a first duration;
an IPM temperature determining module, configured to determine whether a first temperature, which is a temperature of an intelligent power module IPM, exceeds a first threshold and, if the first temperature does not exceeds the first threshold, a coil temperature determining module is operated; otherwise, a frequency adjusting module is operated to adjust the first frequency, and operate the inverter compressor for a third preset duration, and then the IPM temperature determining module is operated;
the coil temperature determining module, configured to determine a second temperature, which is a temperature of an outdoor coil, and determine whether the first frequency needs to be adjusted according to a temperature interval into which the second temperature falls and, if the first frequency needs to be adjusted, the frequency adjusting module is operated to adjust the first frequency, and operate the inverter compressor at an increased frequency for a first preset duration, and then the IPM temperature determining module is operated; otherwise, an exhaust pressure detecting module is operated;
the exhaust pressure detecting module, configured to determine whether an exhaust pressure is below a preset threshold and, if the exhaust pressure is below the preset threshold, the frequency adjusting module is operated to adjust the first frequency, and operate the inverter compressor for a second preset duration, and then the IPM temperature determining module is operated; otherwise, a disabling module is operated;
the disabling module, configured to disable the inverter compressor.

In the control method and controller for the inverter air conditioner provided by some embodiments of the present application, the inverter compressor is enabled and operated at the first frequency for the first duration to stabilize the indoor temperature at a certain temperature. Then, the temperature of the IPM is detected. If the temperature of the IPM does not exceed the threshold, and the IPM is in a safe environment, the temperature of the outdoor coil is detected. According to the temperature interval into which the temperature of the outdoor coil falls, it is determined whether to adjust the first frequency. If the outdoor coil temperature is relatively low, the first frequency needs to be increased to enhance the cooling capacity of the inverter air conditioner, and to further correct the temperature of the outdoor coil, so as to achieve the control for the inverter air conditioner, thereby fulfilling the purpose of not attenuating the cooling capacity of the inverter air conditioner in the high temperature environment.

### BRIEF DESCRIPTION OF THE DRAWINGS

In order to more clearly illustrate the technical solution of the method embodiment of the present application, a brief description of the drawings to be used in describing some embodiments will be briefly introduced. Apparently, the drawings described in the following are merely some of some embodiments of the method of the present application. Those skilled in the art can also derive other drawings according to these drawings without paying any creative labor.
FIGS. 1A and 1B are flowcharts of some embodiments of a control method for an inverter air conditioner according to an embodiment of the present invention;
FIGS. 2A and 2B are flowcharts of a second embodiment of a control method for an inverter air conditioner according to an embodiment of the present invention;
FIG. 3 is a schematic structural diagram of a first embodiment of a controller for an inverter air conditioner according to an embodiment of the present invention; and
FIG. 4 is a schematic structural diagram of a second embodiment of a controller for an inverter air conditioner according to an embodiment of the present invention.

### DETAILED DESCRIPTION OF THE EMBODIMENTS

In order to make objectives, technical solutions and advantages of embodiments of the present invention clearer, the technical solutions in some embodiments of the present application will be described hereunder clearly and completely with reference to accompanying drawings. Obviously, the described embodiments are only a part of embodiments of the present invention, rather than all of them. All other embodiments derived by those skilled in the art based on some embodiments of the present invention without making any creative effort shall fall within the scope of the present application.

The terms "first", "second", "third", "fourth", etc. (if present) in the specification and claims of the present application and the aforementioned drawings are used to distinguish similar objects without necessarily describing any specific sequence or order. It is to be understood that the data used as such may be interchanged as appropriate, so that some embodiments of the present application described herein can be implemented, for example, in a sequence other than those illustrated or described herein. In addition, the terms "comprise" and "include" and their variations in any form are intended to cover a non-exclusive inclusion. For example, a process, method, system, product or device that "comprises" a series of steps or units is not necessarily limited to those listed steps or units. Rather, they may include other steps or units not explicitly listed or inherent to such process, method, system, product or device.

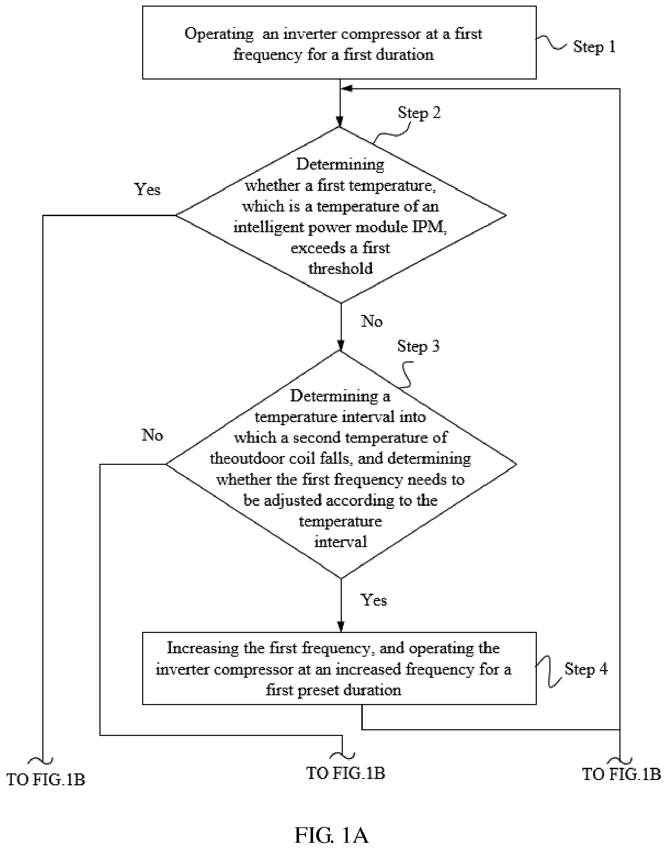

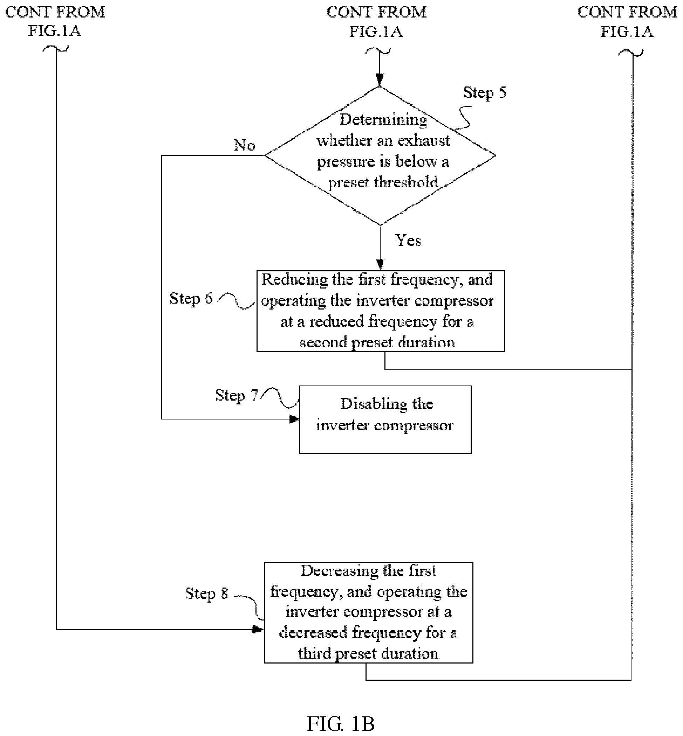

FIGS. 1A and 1B are flowcharts of some embodiments of a control method for an inverter air conditioner according to an embodiment of the present invention.

The implementing entity of some embodiments of the present invention is a controller for the inverter air conditioner, and the controller is disposed in the inverter air conditioner. Some embodiments of the present invention include:
Step 1: operating an inverter compressor at a first frequency for a first duration. In some examples, which are not part of the present invention, an environment may be categorized as three types according to a type of climate: such as, a first type: T1 environment can be an environment in which a maximum temperature is 43°C; a second type: T2 environment can be an environment in which the maximum temperature is 35°C; a third type: T3 environment can be an environment in which the maximum temperature is 52°C. In some examples,
   a highest temperature in the T1 environment is greater than a highest temperature in the T2 environment, and a highest temperature in the T3 environment is greater than the highest temperature in the T1 environment. In some examples,
   a difference between the highest temperature in the T1 environment and the highest temperature in the T2 environment is greater than 5°C. A difference between the highest temperature in the T3 environment and the highest temperature in the T1 environment is greater than 5°C. The inverter air conditioner is mainly applied in the T3 environment. In the T3 environment, the inverter air conditioner is enabled to enable the inverter compressor of the inverter air conditioner, and to operate the inverter compressor at a first frequency for a first duration. After operating for the first duration, the indoor temperature tends to be stabilized. The first frequency is, for example, an initial frequency of the inverter compressor, which is generally at 50 to 55 HZ. The first duration is a predetermined value, which may be, for example, 5 minutes (min).
Step 2: determining whether a first temperature, which is a temperature of an intelligent power module IPM, exceeds a first threshold and, if the first temperature does not exceed the first threshold, proceeding to Step 3; otherwise, proceeding to Step 8.

In some embodiments of the present invention, the temperature of the intelligent power module (IPM) is referred to as the first temperature, and a temperature of an outdoor coil of the inverter air conditioner is referred to as a second temperature. In this step, the first temperature of the IPM is detected. For example, a temperature sensor is provided for the IPM, and the first temperature of the IPM is detected according to the temperature sensor. After the first temperature is detected, it is determined that whether the first temperature exceeds the first threshold. If the first temperature exceeds the first threshold, it indicates that the temperature of the IPM is too high, and the IPM may be damaged as working at this temperature for an exceeding time. Then, it is required to proceed to Step 8 to decrease the first frequency in order to decrease the temperature of the IPM. Otherwise, if the first temperature does not exceed the first threshold, then it indicates that the temperature of the IPM is appropriate, working at this temperature will not damage the IPM, and the process may proceed to Step 3.

Step 3: determining a temperature interval into which a second temperature of the outdoor coil falls, and determining whether the first frequency needs to be adjusted according to the temperature interval and, if the first frequency needs to be adjusted, proceeding to Step 4; otherwise, proceeding to Step 5.

After determining that whether the first temperature exceeds the first threshold, the process moves on to determine the temperature interval into which the second temperature of the outdoor determination falls, and then determine whether the first frequency needs to be adjusted according to the temperature interval. Temperatures in the temperature interval can be partitioned from low to high into a first interval, a second interval, a third interval, and a fourth interval, which are successive. In this step, it is determined into which interval the second temperature taken outdoor falls, and the follow-up action will be different according to different intervals. If the second temperature falls into the first interval or the second interval, Step 4 is performed to adjust the first frequency. And return to Step 2 after the adjustment. Since change of the first frequency also causes change of the second temperature, a correction of the second temperature of the outdoor coil can be achieved. If the second temperature falls into the third interval or the fourth interval, Step 5 is performed to detect an exhaust pressure of the inverter air conditioner. Where a temperature represented by a low temperature interval including the first interval and the second interval is lower than a temperature represented by a high temperature interval including the third interval and the fourth interval.

Step 4: increasing the first frequency, and operating the inverter compressor at an increased frequency for a first preset duration, and returning to Step 2.

If it is determined that the second temperature falls into the first interval in Step 3, Step 4 can be: increasing the first frequency by a first value to obtain a second frequency, operating the inverter compressor at the second frequency for the first preset duration, and returning to Step 2.

If it is determined that the second temperature falls into the second interval in Step 3, the Step 4 can be: increasing the first frequency by a second value to obtain a third frequency, operating the inverter compressor at the third frequency for the first preset duration, and returning to Step 2. Where the first value is bigger than the second value.

When the second temperature falls into the first interval or the second interval, the first frequency is increased to enhance the cooling capacity of the inverter air conditioner.

If it is determined that the second temperature falls into the third interval or the fourth interval in Step 3, it is proceeded to Step 5.

According to the example, as the second temperature falls into the first interval, the second temperature ≤ 62°C; as the second temperature falls into the second interval, 62°C < the second temperature < 67°C; as the second temperature falls into the third interval, 67°C < the second temperature < 70°C; and as the second temperature falls into the fourth interval, the second temperature ≥70°C. The first value is above the second value. It can be seen that when the second temperature is relatively low, the first frequency needs to be adjusted, and when the second temperature is relatively high, an exhaust pressure needs to be determined.

Step 5: determining whether the exhaust pressure is below a preset threshold and, if the exhaust pressure is below the preset threshold, proceeding to Step 6; otherwise, proceeding to Step 7.

Step 6: reducing the first frequency, and operating the inverter compressor at a reduced frequency for a second preset duration, and then returning to Step 2.

Step 7: disabling the inverter compressor.

In some embodiments of the present invention, a pressure switch is mounted on an exhaust pipe of the inverter air conditioner. In Step 5, the pressure is detected by the pressure switch. When the exhaust pressure is below the preset threshold, Step 6 is performed to reduce the first frequency, and the inverter compressor is operated at the reduced frequency for the second preset duration. When the exhaust pressure is above the preset threshold, it indicates that the pressure of the exhaust pipe is too large, which may damage the exhaust pipe. Then, Step 7 is performed to disable the inverter compressor, such as, disable the inverter air conditioner.

Step 8: decreasing the first frequency, and operating the inverter compressor at a decreased frequency for a third preset duration, and then returning to Step 2.

In the control method for the inverter air conditioner provided by some embodiments of the present application, the inverter compressor is enabled and operated at the first frequency for the first duration to stabilize the indoor temperature at a certain temperature. Then, the temperature of the IPM is detected. If the temperature of the IPM does not exceed the threshold, and the IPM is in a safe environment, the temperature of the outdoor coil is detected. According to the temperature interval into which the temperature of the outdoor coil falls, it is determined whether to adjust the first frequency. If the outdoor coil temperature is relatively low, the first frequency needs to be increased to enhance the cooling capacity of the inverter air conditioner, and to further correct the temperature of the outdoor coil. If the outdoor coil temperature is relatively high, the first frequency does not need any adjustment right now, and the exhaust pressure is detected, so as to achieve the control for the inverter air conditioner, thereby fulfilling the purpose of not attenuating the cooling capacity of the inverter air conditioner in the high temperature environment.

Now, an embodiment will be employed to detail the control method for the inverter air conditioner of the present invention.

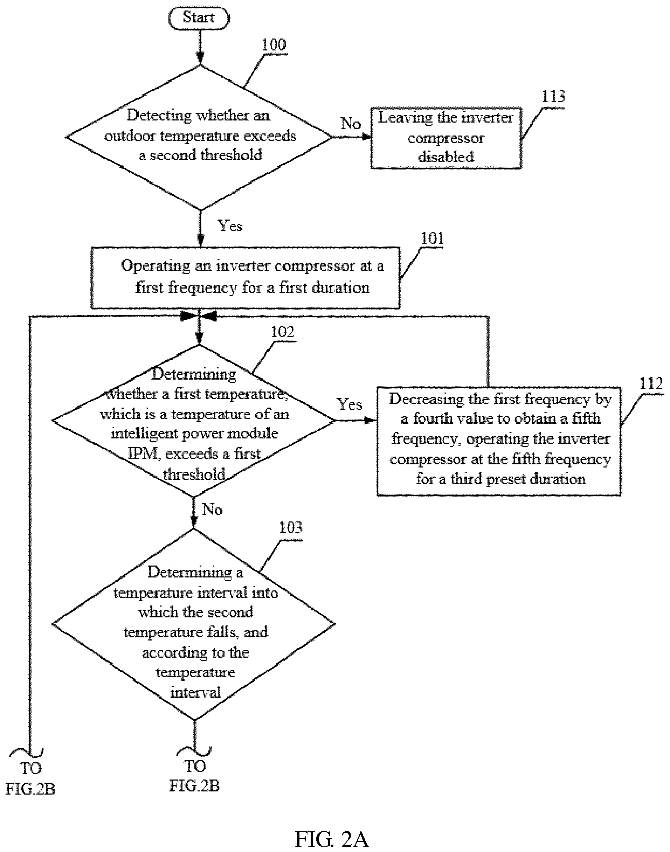

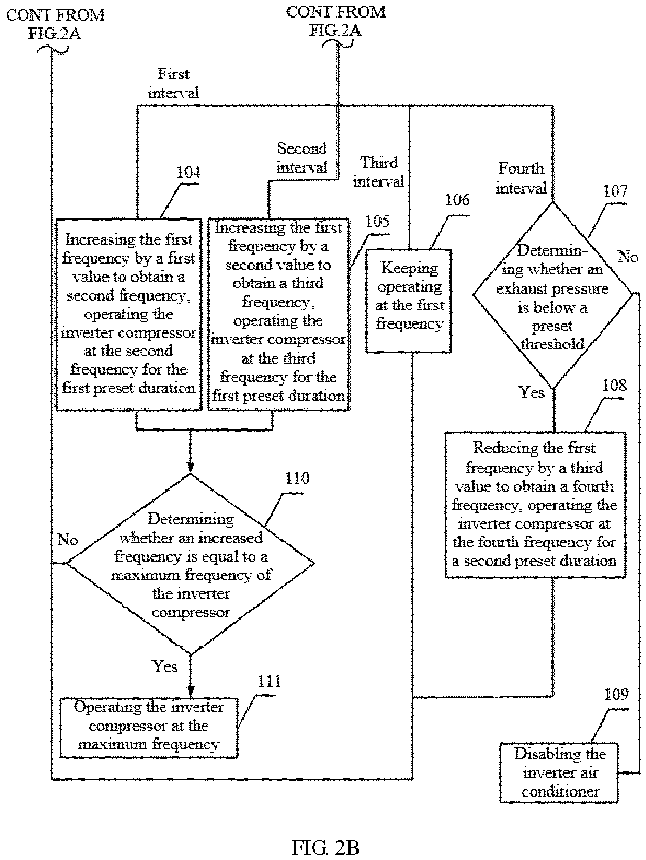

Reference may be made to FIGS. 2A and 2B, which are flowcharts of a second embodiment of a control method for an inverter air conditioner according to the present invention. Some embodiments include:
100: detecting whether an outdoor temperature exceeds a second threshold and, if the outdoor temperature exceeds a second threshold, proceeding to 101; otherwise, proceeding to 113: leaving the inverter compressor disabled.

The inverter air conditioner provided in some examples can be applied in the T3 environment such as where the temperature is above 50°C. Only when the outdoor temperature exceeds a second threshold, the control method for the inverter air conditioner provided in the present application will be used. For an environment with a temperature below 50°C, the relevant art air conditioners can be used for temperature adjustment.
101: operating an inverter compressor at a first frequency for a first duration.

In this step, the inverter air conditioner is enabled to start cooling, so as to operate the inverter compressor at the first frequency, e.g., a frequency of 50 to 55 Hz, for the first duration, e.g., a duration of 5 min.
102: determining whether a first temperature, which is a temperature of an intelligent power module IPM, exceeds a first threshold and, if the first temperature does not exceed a first threshold, proceeding to 103; otherwise, proceeding to 112.

In this examples the first threshold is set to 90°C. In this step, it is detected whether the temperature of the outdoor IPM satisfies a condition that the first temperature≤90°C, and if the first temperature≤90°C, proceeding to 103; otherwise, proceeding to 112.
103: determining a temperature interval into which the second temperature falls, and according to the temperature interval.

The second temperature of the outdoor coil is detected, and then the interval into which the second temperature falls is determined according to the second temperature by way of a look-up table. Temperatures in the temperature interval can be partitioned from low to high into a first interval, a second interval, a third interval, and a fourth interval, which are successive, where, as the second temperature falls into the first interval, the second temperature ≤ 62°C; as the second temperature falls into the second interval, 62°C < the second temperature < 67°C; as the second temperature falls into the third interval, 67°C < the second temperature < 70°C; and as the second temperature falls into the fourth interval, the second temperature≥70°C. If it is determined that the second temperature falls into the first interval, 104 is performed; if it is determined that the second temperature falls into the second interval, 105 is performed; if it is determined that the temperature interval falls into the third interval, 106 is performed; and if it is determined that the temperature interval falls into the fourth interval, 107 is performed.
104: increasing the first frequency by a first value to obtain a second frequency, operating the inverter compressor at the second frequency for the first preset duration.

The first value may be, e.g., 5 Hz, and the first preset duration may be, e.g., 1 to 10 min. In this step, the first frequency is raised to obtain the second frequency, at which the process continues for 1 to 10 min before returning to 102. Such as, when the second temperature is in the first interval, the first frequency is increased, and after operating for 1 to 10 min at the increased frequency, the first temperature of the IPM is re- detected. When the first temperature of the IPM is below the first threshold, the process proceeds to detect the second temperature of the outdoor coil. If the second temperature still falls into the first interval, the process continues circularly, until the second temperature drops out of the first interval and reaches the second interval.
105: increasing the first frequency by a second value to obtain a third frequency, operating the inverter compressor at the third frequency for the first preset duration.

The second value may be, e.g., 3 Hz, and the first preset duration may be, e.g., 1 to 10 min. In this step, the first frequency is raised to obtain the third frequency, at which the process continues for 1 to 10 min before returning to 102. Such as, when the second temperature is in the second interval, the first frequency is increased, and after operating for 1 to 10 min at the increased frequency, the first temperature of the IPM is re- detected. When the first temperature of the IPM is below the first threshold, the process proceeds to collect the second temperature of the outdoor coil. If the second temperature still falls into the second interval, the process continues circularly, until the second temperature drops out of the second interval and reaches the third interval.
106: keeping operating at the first frequency, and returning to 102.

In this step, the inverter compressor is kept operating at the first frequency.
107: determining whether an exhaust pressure is below a preset threshold and, if the exhaust pressure is below the preset threshold, proceeding to 108; otherwise, proceeding to 109.

The exhaust pressure need to be detected in this step. If the exhaust pressure ≤ 4.8 MPa, 108 is performed to reduce the first frequency; otherwise, 109 is performed to disable the inverter air conditioner.
108: reducing the first frequency by a third value to obtain a fourth frequency, operating the inverter compressor at the fourth frequency for a second preset duration, and returning to 102.

The third value is, e.g., 3 Hz, and the second preset duration is, e.g., 1 to 10 min. In this step, the first frequency is reduced to obtain the fourth frequency, at which the process continues for 1 to 10 min before returning to 102.
109: disabling the inverter air conditioner.

After the above steps 104 and 105, the method includes:
110: determining whether an increased frequency is equal to a maximum frequency of the inverter compressor and, if the increased frequency is equal to the maximum frequency of the inverter compressor, proceeding to 111, otherwise, returning to 102.
111: operating the inverter compressor at the maximum frequency, and returning to 102.
112: decreasing the first frequency by a fourth value to obtain a fifth frequency, operating the inverter compressor at the fifth frequency for a third preset duration, and returning to 102.

The fourth value is, e.g., 5 Hz, and the third preset duration is, e.g., 1 to 10 min. In this step, the first frequency is reduced to obtain the fifth frequency, at which the process continues for 1 to 10 min before returning to 102.

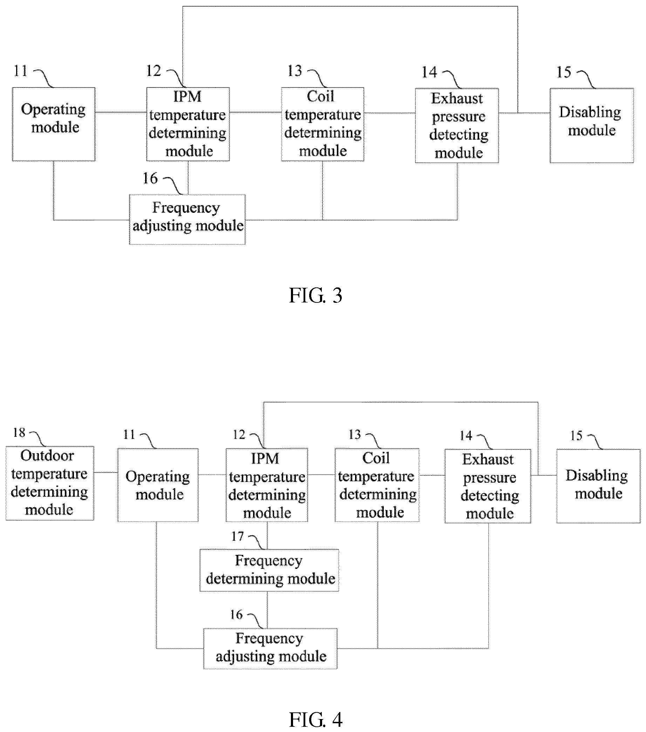

FIG. 3 is a schematic structural diagram of a first embodiment of a controller for an inverter air conditioner according to the present invention.

The controller for the inverter air conditioner provided in this embodiment can implement various steps of the above-mentioned control method for the inverter air conditioner applied to the controller side of the inverter air conditioner provided by any embodiment of the present invention.

The controller for an inverter air conditioner provided in this embodiment includes:
an operating module 11, configured to operate an inverter compressor at a first frequency for a first duration;
an IPM temperature determining module 12, configured to determine whether a first temperature, which is a temperature of an intelligent power module IPM, exceeds a first threshold and, if the first temperature does not exceed the first threshold, a coil temperature determining module 13 is operated; otherwise, a frequency adjusting module 16 is operated to decrease the first frequency, and operate the inverter compressor at a decreased frequency for a third preset duration, and then the IPM temperature determining module 12 is operated;
the coil temperature determining module 13, configured to determine a temperature interval into which a second temperature of the outdoor coil falls, and determine whether the first frequency needs to be adjusted according to the temperature interval and, if the first frequency needs to be adjusted, the frequency adjusting module 16 is operated to increase the first frequency, and operate the inverter compressor at an increased frequency for a first preset duration, and then the IPM temperature determining module 12 is operated; otherwise, an exhaust pressure detecting module 14 is operated;
the exhaust pressure detecting module 14, configured to determine whether an exhaust pressure is below a preset threshold and, if the exhaust pressure is below the preset threshold, the frequency adjusting module 16 is operated to decrease the first frequency, and operate the inverter compressor at a decreased frequency for a second preset duration, and then the IPM temperature determining module 12 is operated; otherwise, a disabling module 15 is operated;
the disabling module 15, configured to disable the inverter compressor.

In the controller for the inverter air conditioner provided by some embodiments of the present application, the inverter compressor is enabled and operated at the first frequency for the first duration to stabilize the indoor temperature at a certain temperature. Then, the temperature of the IPM is detected. If the temperature of the IPM does not exceed the threshold, and the IPM is in a safe environment, the temperature of the outdoor coil is detected. According to the temperature interval into which the temperature of the outdoor coil falls, it is determined whether to adjust the first frequency. If the outdoor coil temperature is relatively low, the first frequency needs to be increased to enhance the cooling capacity of the inverter air conditioner, and to further correct the temperature of the outdoor coil. If the outdoor coil temperature is relatively high, the first frequency does not need any adjustment right now, and the exhaust pressure is detected, so as to achieve the control for the inverter air conditioner, thereby fulfilling the purpose of not attenuating the cooling capacity of the inverter air conditioner in the high temperature environment.

In some embodiments of the present invention, temperatures in the temperature interval can be partitioned from low to high into a first interval, a second interval, a third interval, and a fourth interval, which are successive.

If the coil temperature determining module 13 determines that the second temperature falls into the first interval, the frequency adjusting module 16 can be configured to: increase the first frequency by a first value to obtain a second frequency, operate the inverter compressor at the second frequency for the first preset duration, and then the IPM temperature determining module 12 is operated.

If the coil temperature determining module 13 determines that the second temperature into the second interval, the frequency adjusting module 16 can be configured to: increase the first frequency by a second value to obtain a third frequency, operate the inverter compressor at the third frequency for the first preset duration, and then the IPM temperature determining module 12 is operated.

If the coil temperature determining module 13 determines that the second temperature falls into the third interval or the fourth interval, the exhaust pressure detecting module 14 is operated.

In some examples, as the second temperature falls into the first interval, the second temperature ≤ 62°C;
as the second temperature falls into the second interval, 62°C < the second temperature < 67°C;
as the second temperature falls into the third interval, 67°C < the second temperature < 70°C;
as the second temperature falls into the fourth interval, the second temperature≥70°C.

In some embodiments of the present application, if the exhaust pressure detecting module 14 determines that the exhaust pressure is below a preset threshold, the frequency adjusting module 16 can be configured to: reduce the first frequency by a third value to obtain a fourth frequency, operate the inverter compressor at the fourth frequency for the second preset duration, and then the IPM temperature determining module 12 is operated.

FIG. 4 is a schematic structural diagram of a second embodiment of a controller for an inverter air conditioner according to the present invention.

On the basis of the above FIG. 3, the controller for the inverter air conditioner provided in this embodiment further includes:
a frequency determining module 17, configured to: after the frequency adjusting module 16 increases the first frequency and before the IPM temperature determining module 12 is operated, determine whether an increased frequency is equal to a maximum frequency of the inverter compressor and, if the increased frequency is equal to the maximum frequency of the inverter compressor, the operating module 11 is operated to operate the inverter compressor at the maximum frequency, and then the IPM temperature determining module 12 is operated; otherwise, the IPM temperature determining module 12 is operated.

Referring again to FIG. 4, the controller for the inverter air conditioner provided in some embodiments further includes:
an outdoor temperature determining module 18, configured to detect whether an outdoor temperature exceeds a second threshold and, if the outdoor temperature exceeds the second threshold, the operating module 11 is operated; otherwise, the inverter compressor is left disabled.

Those skilled in the art may understand that, all or a part of steps of the foregoing method embodiments may be implemented by a program instructing relevant hardware. The foregoing program may be stored in a computer readable storage medium. When running the program, the steps of the foregoing embodiment methods are performed. The foregoing storage medium includes various mediums capable of storing program codes, such as a ROM (read only memory), a RAM (random access memory), a magnetic disk, an optical disc, or the like.

Finally, it should be noted that the foregoing embodiments are merely intended for describing, rather than limiting, the technical solutions of the present disclosure. The scope of the invention is solely defined by the appended claims.

## Claims

1. A control method for an inverter air conditioner, comprising:
Step 1: operating an inverter compressor at a first frequency for a first duration;
Step 2: determining whether a first temperature, which is a temperature of an intelligent power module, IPM, exceeds a first threshold and, if the first temperature does not exceed the first threshold, proceeding to Step 3; otherwise, proceeding to Step 8;
Step 3: determining a temperature interval into which a second temperature of the outdoor coil falls, and determining whether the first frequency needs to be adjusted according to the temperature interval and, if the first frequency needs to be adjusted, proceeding to Step 4; otherwise, proceeding to Step 5;
Step 4: increasing the first frequency, and operating the inverter compressor at an increased frequency for a first preset duration, and returning to Step 2;
Step 5: determining whether an exhaust pressure is below a preset threshold and, if the exhaust pressure is below the preset threshold, proceeding to Step 6; otherwise, proceeding to Step 7;
Step 6: reducing the first frequency, and operating the inverter compressor at a reduced frequency for a second preset duration, and then returning to Step 2;
Step 7: disabling the inverter compressor; and
Step 8: decreasing the first frequency, and operating the inverter compressor at a decreased frequency for a third preset duration, and then returning to Step 2.

2. The method according to claim 1, wherein temperatures in the temperature interval are partitioned from low to high into a first interval, a second interval, a third interval, and a fourth interval, which are successive, wherein:
if it is determined that the second temperature falls into the first interval or the second interval, proceeding to Step 4; and
if it is determined that the second temperature falls into the third interval or the fourth interval, proceeding to Step 5.

3. The method according to claim 2, wherein:
if it is determined that the second temperature falls into the first interval in the Step 3, Step 4 is: increasing the first frequency by a first value to obtain a second frequency, operating the inverter compressor at the second frequency for the first preset duration, and returning to Step 2; and
if it is determined that the second temperature falls into the second interval in the Step 3, the Step 4 is: increasing the first frequency by a second value to obtain a third frequency, operating the inverter compressor at the third frequency for the first preset duration, and returning to Step 2.

4. The method according to any one of claims 1 to 3, wherein the Step 6 is:
reducing the first frequency by a third value to obtain a fourth frequency, operating the inverter compressor at the fourth frequency for the second preset duration, and returning to Step 2.

5. The method according to any one of claims 1 to 3, wherein the Step 8 is:
decreasing the first frequency by a fourth value to obtain a fifth frequency, operating the inverter compressor at the fifth frequency for the third preset duration, and returning to Step 2.

6. The method according to any one of claims 1 to 3, wherein after the Step 4 and before returning to the Step 2, the method further comprises:
Step 9: determining whether an increased frequency is equal to a maximum frequency of the inverter compressor and, if the increased frequency is equal to the maximum frequency of the inverter compressor, proceeding to Step 10, otherwise, returning to Step 2; and
Step 10: operating the inverter compressor at the maximum frequency, and returning to Step 2.

7. The method according to any one of claims 1 to 3, wherein before the Step 1, the method further comprises:
Step 0: detecting whether an outdoor temperature exceeds a second threshold and, if the outdoor temperature exceeds the second threshold, proceeding to the Step 1; if otherwise, leaving the inverter compressor disabled.

8. A controller for an inverter air conditioner, comprising:
an operating module (11), configured to operate an inverter compressor at a first frequency for a first duration;
an intelligent power module, IPM, temperature determining module (12), configured to determine whether a first temperature, which is a temperature of an IPM, exceeds a first threshold and, if the first temperature does not exceed the first threshold, a coil temperature determining module (13) is operated; otherwise, a frequency adjusting module (16) is operated to reduce the first frequency, and operate the inverter compressor at a reduced frequency for a third preset duration, and then the IPM temperature determining module (12) is operated;
the coil temperature determining module (13), configured to determine a temperature interval into which a second temperature of the outdoor coil falls, and determine whether the first frequency needs to be adjusted according to the temperature interval and, if the first frequency needs to be adjusted, the frequency adjusting module (16) is operated to increase the first frequency, and operate the inverter compressor at an increased frequency for a first preset duration, and then the IPM temperature determining module (12) is operated; otherwise, an exhaust pressure detecting module (14) is operated;
the exhaust pressure detecting module (14), configured to determine whether an exhaust pressure is below a preset threshold and, if the exhaust pressure is below the preset threshold, the frequency adjusting module (16) is operated to decrease the first frequency, and operate the inverter compressor at a decreased frequency for a second preset duration, and then the IPM temperature determining module (12) is operated; otherwise, a disabling module (15) is operated; and
the disabling module (15), configured to disable the inverter compressor.

9. The controller according to claim 8, wherein temperatures in the temperature interval are partitioned from low to high into a first interval, a second interval, a third interval, and a fourth interval, which are successive,
if the coil temperature determining module (13) determines that the second temperature falls into the first interval or the second interval, the frequency adjusting module (16) is operated to increase the first frequency; and
if the coil temperature determining module (13) determines that the second temperature falls into the third interval or the fourth interval, the exhaust pressure detecting module (14) is operated.

10. The controller according to claim 9, wherein if the coil temperature determining module (13) determines that the second temperature falls into the first interval, the frequency adjusting module (16) is configured to: increase the first frequency by a first value to obtain a second frequency, operate the inverter compressor at the second frequency for the first preset duration, and then the IPM temperature determining module (12) is operated; and
if the coil temperature determining module (13) determines that the second temperature falls into the second interval, the frequency adjusting module (16) is configured to: increase the first frequency by a second value to obtain a third frequency, operate the inverter compressor at the third frequency for the first preset duration, and then the IPM temperature determining module (12) is operated.

11. The controller according to any one of claims 8 to 10, wherein:
if the exhaust pressure detecting module (14) determines that the exhaust pressure is below a preset threshold, the frequency adjusting module (16) is configured to: reduce the first frequency by a third value to obtain a fourth frequency, operate the inverter compressor at the fourth frequency for the second preset duration, and then the IPM temperature determining module (12) is operated.

12. The controller according to any one of claims 8 to 10, further comprising:
a frequency determining module (17), configured to: after the frequency adjusting module (16) increases the first frequency and before the IPM temperature determining module (12) is operated, determine whether an increased frequency is equal to a maximum frequency of the inverter compressor and, if the increased frequency is equal to the maximum frequency of the inverter compressor, the operating module (11) is operated to operate the inverter compressor at the maximum frequency, and then the IPM temperature determining module (12) is operated; otherwise, the IPM temperature determining module (12) is operated.

13. The controller according to any one of claims 8 to 10, further comprising:
an outdoor temperature determining module (18), configured to detect whether an outdoor temperature exceeds a second threshold and, if the outdoor temperature exceeds the second threshold, the operating module (11) is operated; otherwise, the inverter compressor is left disabled.

## Patentansprüche

1. Steuerverfahren für eine Inverterklimaanlage, umfassend:
Schritt 1: Betreiben eines Inverterverdichters mit einer ersten Frequenz für eine erste Dauer;
Schritt 2: Bestimmen, ob eine erste Temperatur, die eine Temperatur eines intelligenten Leistungsmoduls (IPM) ist, einen ersten Schwellenwert überschreitet, und, wenn die erste Temperatur den ersten Schwellenwert nicht überschreitet, Fortfahren mit Schritt 3; andernfalls Fortfahren mit Schritt 8;
Schritt 3: Bestimmen eines Temperaturintervalls, in das eine zweite Temperatur der Außenwindung fällt, und Bestimmen, ob die erste Frequenz entsprechend dem Temperaturintervall angepasst werden muss, und, wenn die erste Frequenz angepasst werden muss, Fortfahren mit Schritt 4; andernfalls Fortfahren mit Schritt 5;
Schritt 4: Erhöhen der ersten Frequenz und Betreiben des Inverterverdichters mit erhöhter Frequenz für eine erste voreingestellte Dauer und Zurückkehren zu Schritt 2;
Schritt 5: Bestimmen, ob ein Auslassdruck unter einem voreingestellten Schwellenwert liegt, und, wenn der Auslassdruck unter dem voreingestellten Schwellenwert liegt, Fortfahren mit Schritt 6; andernfalls Fortfahren mit Schritt 7;
Schritt 6: Reduzieren der ersten Frequenz und Betreiben des Inverterverdichters mit reduzierter Frequenz für eine zweite voreingestellte Dauer und dann Zurückkehren zu Schritt 2;
Schritt 7: Deaktivieren des Inverterverdichters; und
Schritt 8: Verringern der ersten Frequenz und Betreiben des Inverterverdichters mit verringerter Frequenz für eine dritte voreingestellte Dauer und dann Zurückkehren zu Schritt 2.

2. Verfahren nach Anspruch 1, wobei die Temperaturen im Temperaturintervall von niedrig bis hoch in ein erstes Intervall, ein zweites Intervall, ein drittes Intervall und ein viertes Intervall unterteilt sind, die aufeinander folgen, wobei gilt:
wenn bestimmt wird, dass die zweite Temperatur in das erste Intervall oder in das zweite Intervall fällt, Fortfahren mit Schritt 4; und
wenn bestimmt wird, dass die zweite Temperatur in das dritte Intervall oder in das vierte Intervall fällt, Fortfahren mit Schritt 5.

3. Verfahren nach Anspruch 2, wobei:
wenn bestimmt wird, dass die zweite Temperatur in das erste Intervall im Schritt 3 fällt, ist Schritt 4: Erhöhen der ersten Frequenz um einen ersten Wert, um eine zweite Frequenz zu erhalten, Betreiben des Inverterverdichters mit der zweiten Frequenz für die erste voreingestellte Dauer und Zurückkehren zu Schritt 2; und
wenn bestimmt wird, dass die zweite Temperatur in das zweite Intervall im Schritt 3 fällt, ist der Schritt 4: Erhöhen der ersten Frequenz um einen zweiten Wert, um eine dritte Frequenz zu erhalten, Betreiben des Inverterverdichters mit der dritten Frequenz für die erste voreingestellte Dauer und Zurückkehren zu Schritt 2.

4. Verfahren nach einem der Ansprüche 1 bis 3, wobei der Schritt 6 lautet:
Reduzieren der ersten Frequenz um einen dritten Wert, um eine vierte Frequenz zu erhalten, Betreiben des Inverterverdichters mit der vierten Frequenz für die zweite voreingestellte Dauer und Zurücckehren zu Schritt 2.

5. Verfahren nach einem der Ansprüche 1 bis 3, wobei der Schritt 8 lautet:
Verringern der ersten Frequenz um einen vierten Wert, um eine fünfte Frequenz zu erhalten, Betreiben des Inverterverdichters mit der fünften Frequenz für die dritte voreingestellte Dauer und Zurückkehren zu Schritt 2.

6. Verfahren nach einem der Ansprüche 1 bis 3, wobei das Verfahren nach dem Schritt 4 und vor dem Zurückkehren zu Schritt 2 ferner umfasst:
Schritt 9: Bestimmen, ob eine erhöhte Frequenz gleich einer maximalen Frequenz des Inverterverdichters ist, und, wenn die erhöhte Frequenz gleich der maximalen Frequenz des Inverterverdichters ist, Fortfahren mit Schritt 10, andernfalls Zurückkehren zu Schritt 2; und
Schritt 10: Betreiben des Inverterverdichters mit der maximalen Frequenz und Zurückkehren zu Schritt 2.

7. Verfahren nach einem der Ansprüche 1 bis 3, wobei das Verfahren vor dem Schritt 1 ferner umfasst:
Schritt 0: Erfassen, ob eine Außentemperatur einen zweiten Schwellenwert überschreitet, und, wenn die Außentemperatur den zweiten Schwellenwert überschreitet, Fortfahren mit Schritt 1; andernfalls den Inverterverdichter deaktiviert lassen.

8. Steuerungseinheit für eine Inverterklimaanlage, umfassend:
ein Betriebsmodul (11), das eingerichtet ist, einen Inverterverdichter mit einer ersten Frequenz für eine erste Dauer zu betreiben;
ein Temperaturbestimmungsmodul (12) eines intelligenten Leistungsmoduls (IPM), das eingerichtet ist, zu bestimmen, ob eine erste Temperatur, die eine Temperatur eines IPM ist, einen ersten Schwellenwert überschreitet, und, wenn die erste Temperatur den ersten Schwellenwert nicht überschreitet, wird ein Windungstemperaturbestimmungsmodul (13) betrieben; andernfalls wird ein Frequenzanpassungsmodul (16) betrieben, um die erste Frequenz zu reduzieren und den Inverterverdichter mit einer reduzierten Frequenz für eine dritte voreingestellte Dauer zu betreiben, und dann wird das IPM-Temperaturbestimmungsmodul (12) betrieben;
das Windungstemperaturbestimmungsmodul (13), das eingerichtet ist, ein Temperaturintervall zu bestimmen, in das eine zweite Temperatur der Außenwindung fällt, und zu bestimmen, ob die erste Frequenz entsprechend dem Temperaturintervall angepasst werden muss, und, wenn die erste Frequenz angepasst werden muss, wird das Frequenzanpassungsmodul (16) betrieben, um die erste Frequenz zu erhöhen und den Inverterverdichter mit einer erhöhten Frequenz für eine erste voreingestellte Dauer zu betreiben, und dann wird das IPM-Temperaturbestimmungsmodul (12) betrieben; andernfalls wird ein Auslassdruckerfassungsmodul (14) betrieben;
das Auslassdruckerfassungsmodul (14), das eingerichtet ist, zu bestimmen, ob ein Auslassdruck unter einem voreingestellten Schwellenwert liegt, und, wenn der Auslassdruck unter dem voreingestellten Schwellenwert liegt, wird das Frequenzanpassungsmodul (16) betrieben, um die erste Frequenz zu verringern und den Inverterverdichter mit einer verringerten Frequenz für eine zweite voreingestellte Dauer zu betreiben, und dann wird das IPM-Temperaturbestimmungsmodul (12) betrieben; andernfalls wird ein Dektivierungsmodul (15) betrieben; und
das Deaktivierungsmodul (15), das eingerichtet ist, den Inverterverdichter zu deaktivieren.

9. Steuereinheit nach Anspruch 8, wobei die Temperaturen im Temperaturintervall von niedrig bis hoch in ein erstes Intervall, ein zweites Intervall, ein drittes Intervall und ein viertes Intervall unterteilt sind, die aufeinander folgen,
wenn das Windungstemperaturbestimmungsmodul (13) bestimmt, dass die zweite Temperatur in das erste Intervall oder in das zweite Intervall fällt, das Frequenzanpassungsmodul (16) betrieben wird, die erste Frequenz zu erhöhen; und
wenn das Windungstemperaturbestimmungsmodul (13) bestimmt, dass die zweite Temperatur in das dritte Intervall oder in das vierte Intervall fällt, das Auslassdruckerfassungsmodul (14) betrieben wird.

10. Steuereinheit nach Anspruch 9, wobei, wenn das Windungstemperaturbestimmungsmodul (13) bestimmt, dass die zweite Temperatur in das erste Intervall fällt, das Frequenzanpassungsmodul (16) eingerichtet ist zum: Erhöhen der ersten Frequenz um einen ersten Wert, um eine zweite Frequenz zu erhalten, Betreiben des Inverterverdichters mit der zweiten Frequenz für die erste voreingestellte Dauer, und dann wird das IPM-Temperaturbestimmungsmodul (12) betrieben; und
wenn das Windungstemperaturbestimmungsmodul (13) bestimmt, dass die zweite Temperatur in das zweite Intervall fällt, das Frequenzanpassungsmodul (16) eingerichtet ist zum: Erhöhen der ersten Frequenz um einen zweiten Wert, um eine dritte Frequenz zu erhalten, Betreiben des Inverterverdichters mit der dritten Frequenz für die erste voreingestellte Dauer, und dann wird das IPM-Temperaturbestimmungsmodul (12) betrieben.

11. Steuereinheit nach einem der Ansprüche 8 bis 10, wobei:
wenn das Auslassdruckerfassungsmodul (14) bestimmt, dass der Auslassdruck unter einem voreingestellten Schwellenwert liegt, das Frequenzanpassungsmodul (16) eingerichtet ist zum: Reduzieren der ersten Frequenz um einen dritten Wert, um eine vierte Frequenz zu erhalten, Betreiben des Inverterverdichters mit der vierten Frequenz für die zweite voreingestellte Dauer, und dann wird das IPM-Temperaturbestimmungsmodul (12) betrieben.

12. Steuereinheit nach einem der Ansprüche 8 bis 10, ferner umfassend:
ein Frequenzbestimmungsmodul (17), das eingerichtet ist zum: nachdem das Frequenzanpassungsmodul (16) die erste Frequenz erhöht hat und bevor das IPM-Temperaturbestimmungsmodul (12) betrieben wird, Bestimmen, ob eine erhöhte Frequenz gleich einer maximalen Frequenz des Inverterverdichters ist, und, wenn die erhöhte Frequenz gleich der maximalen Frequenz des Inverterverdichters ist, wird das Betriebsmodul (11) betrieben, um den Inverterverdichter mit der maximalen Frequenz zu betreiben, und dann wird das IPM-Temperaturbestimmungsmodul (12) betrieben; andernfalls wird das IPM-Temperaturbestimmungsmodul (12) betrieben.

13. Steuereinheit nach einem der Ansprüche 8 bis 10, ferner umfassend:
ein Außentemperaturbestimmungsmodul (18), das eingerichtet ist, zu erfassen, ob eine Außentemperatur einen zweiten Schwellenwert überschreitet, und wenn die Außentemperatur den zweiten Schwellenwert überschreitet, wird das Betriebsmodul (11) betrieben; andernfalls bleibt der Inverterverdichter deaktiviert.

## Revendications

1. Procédé de contrôle d'un climatiseur onduleur, comprenant :
Étape 1 : le fonctionnement d'un compresseur onduleur à une première fréquence pendant une première durée ;
Étape 2 : la détermination si une première température, qui est une température d'un module d'alimentation intelligent, IPM, dépasse un premier seuil et, si la première température ne dépasse pas le premier seuil, passage à l'étape 3 ; sinon, passage à l'étape 8 ;
Étape 3 : la détermination d'un intervalle de température dans lequel se situe une seconde température du serpentin extérieur, et la détermination de la nécessité d'ajuster la première fréquence en fonction de l'intervalle de température et, si la première fréquence doit être ajustée, passage à l'étape 4 ; dans le cas contraire, passage à l'étape 5 ;
Étape 4 : l'augmentation de la première fréquence et le fonctionnement du compresseur onduleur à une fréquence accrue pendant une première durée prédéfinie, puis retour à l'étape 2 ;
Étape 5 : la détermination si une pression d'échappement est inférieure à un seuil prédéfini et, si la pression d'échappement est inférieure au seuil prédéfini, passage à l'étape 6 ; dans le cas contraire, passage à l'étape 7 ;
Étape 6 : la réduction de la première fréquence et le fonctionnement du compresseur onduleur à une fréquence réduite pendant une deuxième durée prédéfinie, puis retour à l'étape 2 ;
Étape 7 : la désactivation du compresseur onduleur ; et
Étape 8 : la réduction de la première fréquence et le fonctionnement du compresseur onduleur à une fréquence réduite pendant une troisième durée prédéfinie, puis retour à l'étape 2.

2. Procédé selon la revendication 1, dans lequel les températures dans l'intervalle de température sont réparties de bas en haut dans un premier intervalle, un deuxième intervalle, un troisième intervalle et un quatrième intervalle, qui sont successifs, dans lequel :
s'il est déterminé que la seconde température se situe dans le premier ou le second intervalle, on passe à l'étape 4 ; et
s'il est déterminé que la seconde température se situe dans le troisième ou le quatrième intervalle, on passe à l'étape 5.

3. Procédé selon la revendication 2, dans lequel :
s'il est déterminé que la seconde température tombe dans le premier intervalle à l'étape 3, l'étape 4 consiste à : augmenter la première fréquence d'une première valeur pour obtenir une deuxième fréquence, faire fonctionner le compresseur onduleur à la seconde fréquence pendant la première durée prédéfinie, et revenir à l'étape 2 ; et
s'il est déterminé que la seconde température tombe dans le premier intervalle à l'étape 3, l'étape 4 consiste à : augmenter la première fréquence d'une première valeur pour obtenir une deuxième fréquence, faire fonctionner le compresseur onduleur à la troisième fréquence pendant la première durée prédéfinie, et revenir à l'étape 2.

4. Procédé selon l'une quelconque des revendications 1 à 3, dans lequel l'étape 6 consiste à :
réduire la première fréquence d'une troisième valeur pour obtenir une quatrième fréquence, faire fonctionner le compresseur onduleur à la quatrième fréquence pendant la deuxième durée prédéfinie, et revenir à l'étape 2.

5. Procédé selon l'une quelconque des revendications 1 à 3, dans lequel l'étape 8 consiste à :
réduire la première fréquence d'une quatrième valeur pour obtenir une cinquième fréquence, faire fonctionner le compresseur onduleur à la cinquième fréquence pendant la troisième durée prédéfinie, et revenir à l'étape 2.

6. Procédé selon l'une quelconque des revendications 1 à 3, dans lequel, après l'étape 4 et avant de revenir à l'étape 2, le procédé comprend en outre :
Étape 9 : la détermination si une fréquence accrue est égale à une fréquence maximale du compresseur onduleur et, si la fréquence accrue est égale à la fréquence maximale du compresseur onduleur, passage à l'étape 10, sinon retour à l'étape 2 ; et
Étape 10 : le fonctionnement du compresseur onduleur à la fréquence maximale et retour à l'étape 2.

7. Procédé selon l'une quelconque des revendications 1 à 3, dans lequel, avant l'Étape 1, le procédé comprend en outre :
Étape a : la détection si une température extérieure dépasse un deuxième seuil et, si la température extérieure dépasse le deuxième seuil, passage à l'étape 1 ; dans le cas contraire, laisser le compresseur onduleur désactivé.

8. Dispositif de commande d'un climatiseur onduleur, comprenant :
un module de fonctionnement (11), configuré pour faire fonctionner un compresseur onduleur à une première fréquence pendant une première durée ;
un module de détermination de la température du module de puissance intelligent, IPM, (12), configuré pour déterminer si une première température, qui est une température d'un IPM, dépasse un premier seuil et, si la première température ne dépasse pas le premier seuil, un module de détermination de la température du serpentin (13) est actionné ; sinon, un module de réglage de la fréquence (16) est actionné pour réduire la première fréquence et faire fonctionner le compresseur onduleur à une fréquence réduite pendant une troisième durée prédéfinie, puis le module de détermination de la température de l'IPM (12) est actionné ;
le module de détermination de la température du serpentin (13), configuré pour déterminer un intervalle de température dans lequel tombe une seconde température du serpentin extérieur, et déterminer si la première fréquence doit être ajustée en fonction de l'intervalle de température et, si la première fréquence doit être ajustée, le module de réglage de la fréquence (16) est actionné pour augmenter la première fréquence, et faire fonctionner le compresseur onduleur à une fréquence accrue pendant une première durée prédéfinie, puis le module de détermination de la température de l'IPM (12) est actionné ; sinon, un module de détection de la pression des gaz d'échappement (14) est actionné ;
le module de détection de la pression d'échappement (14), configuré pour déterminer si une pression d'échappement est inférieure à un seuil prédéfini et, si la pression d'échappement est inférieure au seuil prédéfini, le module de réglage de la fréquence (16) est actionné pour diminuer la première fréquence et faire fonctionner le compresseur onduleur à une fréquence réduite pendant une deuxième durée prédéfinie, puis le module de détermination de la température de l'IPM (12) est actionné ; sinon, un module de désactivation (15) est actionné ; et
le module de désactivation (15), configuré pour désactiver le compresseur onduleur,

9. Procédé selon la revendication 8, dans lequel les températures dans l'intervalle de température sont réparties de bas en haut dans un premier intervalle, un deuxième intervalle, un troisième intervalle et un quatrième intervalle, qui sont successifs,
si le module de détermination de la température du serpentin (13) détermine que la seconde température se situe dans le premier ou le deuxième intervalle, le module de réglage de la fréquence (16) est actionné pour augmenter la première fréquence ; et
si le module de détermination de la température du serpentin (13) détermine que la deuxième température tombe dans le troisième ou le quatrième intervalle, le module de détection de la pression d'échappement (14) est actionné.

10. Dispositif de commande selon la revendication 9, dans lequel si le module de détermination de la température du serpentin (13) détermine que la deuxième température tombe dans le premier intervalle, le module de réglage de la fréquence (16) est configuré pour : augmenter la première fréquence d'une première valeur pour obtenir une deuxième fréquence, faire fonctionner le compresseur onduleur à la deuxième fréquence pendant la première durée prédéfinie, et ensuite le module de détermination de la température de l'IPM (12) est actionné ; et
si le module de détermination de la température du serpentin (13) détermine que la deuxième température tombe dans le deuxième intervalle, le module de réglage de la fréquence (16) est configuré pour : augmenter la première fréquence d'une deuxième valeur pour obtenir une troisième fréquence, faire fonctionner le compresseur onduleur à la troisième fréquence pendant la première durée prédéfinie, puis faire fonctionner le module de détermination de la température de l'IPM (12).

11. Dispositif de commande selon l'une quelconque des revendications 8 à 10, dans lequel :
si le module de détection de la pression d'échappement (14) détermine que la pression d'échappement est inférieure à un seuil prédéfini, le module de réglage de la fréquence (16) est configuré pour : réduire la première fréquence d'une troisième valeur afin d'obtenir une quatrième fréquence, faire fonctionner le compresseur onduleur à la quatrième fréquence pendant la deuxième durée prédéfinie, puis faire fonctionner le module de détermination de la température de l'IPM (12).

12. Dispositif de commande selon l'une quelconque des revendications 8 à 10, comprenant en outre :
un module de détermination de la fréquence (17), configuré pour : après que le module de réglage de la fréquence (16) a augmenté la première fréquence et avant que le module de détermination de la température de l'IPM (12) ne soit actionné, déterminer si une fréquence accrue est égale à une fréquence maximale du compresseur onduleur et, si la fréquence accrue est égale à la fréquence maximale du compresseur onduleur, le module de fonctionnement (11) est actionné pour faire fonctionner le compresseur onduleur à la fréquence maximale, puis le module de détermination de la température de l'IPM (12) est actionné ; dans le cas contraire, le module de détermination de la température de l'IPM (12) est actionné.

13. Dispositif de commande selon l'une quelconque des revendications 8 à 10, comprenant en outre :
un module de détermination de la température extérieure (18), configuré pour détecter si une température extérieure dépasse un deuxième seuil et, si la température extérieure dépasse le deuxième seuil, le module de fonctionnement (11) est actionné ; dans le cas contraire, le compresseur onduleur reste désactivé.
